# EUROPEAN PATENT APPLICATION

(11) **EP 0 580 211 A1**
(43) Date of publication of application: **26.01.1994**
(21) Application number: 93201984.7
(22) Date of filing: 07.07.1993
(51) Int. Cl.: H04B 1/20

(54) **Multi-module consumer appliance with button-wise functional indication on a superior module**

(30) Priority: 14.07.1992 EP 92202150
(71) Applicant: Philips Electronics N.V., 5621 BA Eindhoven (NL)
(72) Inventor: De Vet, Johannes Henricus Maria, NL-5656 AA Eindhoven (NL); Van Deemter, Cornelis Jacobus, NL-5656 AA Eindhoven (NL); Gerrissen, Jacques Frederik, NL-5656 AA Eindhoven (NL); Kemp, Johannes Antonius Maria, NL-5656 AA Eindhoven (NL)
(74) Representative: Strijland, Wilfred

(57) **Abstract**

A consumer appliance device has a plurality of physically distinct modules (20,50,52,54) that are interconnected through a digital control network (56). One of the modules is a superior module (20) that has various control actuators (22-36) such as buttons or rotary wheels. Any particular module can be activated, if this is other than the superior module, functions of the non-superior module may be mapped on to hardwared actuators of the superior module. An explanitory indication of the new function is displayed near the destination actuator.

## Description

### FIELD OF THE INVENTION

The invention relates to a consumer appliance device having a first plurality of physically distinct functionality modules that are interconnected through a digital control network. The overall functionality of the device may pertain to audio functions, such as realizable by a so called stereo tower possibly in conjunction with a set of loudspeakers. Alternatively, it may pertain to video functions, such as tuner-monitor-recorder, and also to various other situations, such as for providing environmental control, safety system, food processing or other, or combinations of the above. The modules may be physically joined such as a stereo tower, they may be interconnected by only a set of wires, carrying control and/or user signals, or they may be physically loose in that the only interconnection is wireless. In consequence, it may be a distributed device, although another realization could have a close joining of those modules. Now, commercial convenience has settled to design separate modules that each have a particular functionality inside the device; but the modules may generally be exchanged for another module fulfilling the same general task, but in a different manner. For example, the power of an amplifier is a distinct parameter, as is the format of a video display. This causes the occurrence of devices of various levels of performance through selective inclusion of specific modules. Now, there is a distinct drive to simplify the overall actuation of such devices, in conjunction with a wish to provide a so-called "stylish" appearance. This would be realizable through a lower number of actuators, so that the shaping thereof would offer more designer freedom. However, the novice user should be able to effectively control the device.

### SUMMARY OF THE INVENTION

Accordingly, amongst other things it is an object of the present invention to minimize the overall number of actuators without restricting the scope of the device functionality while keeping actuation of the device as straightforward as possible. Now according to a first aspect of the invention, the object is realized in that it provides a consumer appliance device having a first plurality of physically distinct functionality modules, including at least one superior module, that are interconnected through a digital control network, wherein said superior module comprises a plurality of hardwared actuator elements each topologically associated with a respective display element, said device comprising first actuation means for selective user-activation of a particular one of said modules for subsequent user control and mapping means for thereupon mapping each of a second plurality of user actuatabilities of the actually activated module to a respective one of said hardwared actuator elements in combination with an explicator indication to the display element associated to said respective hardware actuator element as long as said user-activation prevails.

Now, EP-A-129 286 (PHN 10.709) discloses a remote control system comprising a control member with a display and position sensors coupled to the display field. In the known system, the remote control displays first selectors for the respective modules, and upon selection of the particular module displays the actuators thereof. These two layers of actuators require a reset mechanism, because upon selection of a particular module, the whole selection mechanism ceases to be displayed. Such reset mechanism is not user friendly, and the present invention does not need it. Moreover the touch screen of the reference is expensive. The present invention tries to stay close to the superior module and maps functionalities of the other modules to the hardwared actuators of the superior module. As regards the present invention, no remote control is necessary; although such remote control element could be used in addition. A particular advantage of the present invention is that the inexperienced amateur is used to hardwared actuators and less so to a touch screen; this alleviates effecting the control through the present invention. The clarification through the explicator indication was felt a great help in many cases.

In certain situations, applying the invention may lead to a higher number of actuators on the superior module itself, but the gross number of the actuators is generally much less than necessary if every module had its full complement of actuators. Which module is chosen as the superior module is often determined by the control complexity of the modules: one designates the module that has the highest complexity on the control level as the superior module. This often means that the superior module needs only quite few additional hardwared actuators as compared with the situation where it had to be only controlled for its own functioning. This would mean a straightforward or generally conventional layout of its actuator structure.

Now, each of the modules may be selectively activated, either through an actuator or button on the module in question, or through a selecting actuator on the superior module. Advantageously, all these activators are hardwired and continuously accessible. This obviates the need for a reset mechanism; the present invention therewith is fully user friendly. Now, selecting a particular module renders various actuators located on the superior module the destinations of mapping operations from respective actuator functions of the activated module that are now notional only. This means that the actuatability of the origin actuators is mapped. This, however, need not apply to all actuatabilities, and in consequence, the invention allows for various different cooperations between actuators/actuatabilities:
a. Activation of a module:
   - actuator on respective module itself
   - actuator on superior module
   - both types of actuators present for a particular module.
b. Further actuator on superior module
   - actuator continuously accessible and not influenced by invention
   - actuator is destination of activated module's actuatability
   - actuator is rendered inactive upon activation of particular other module
c. Actuatability on "other" module
   - continuously accessible and not influenced by invention
   - continuously accessible and also mapped on an actuation of the superior module
   - if the module is activated through an actuator on the superior module, its actuatability is mapped on an actuator of the superior module and ceases to be actuatable on the particular module
   - actuatability can only be mapped the superior module, but is not present on the "particular" module.

Various combinations of the above possibilities can be made for a particular configuration of the device. Now, in addition to the above, in case of actual mapping the function of the various onto what actuators on the superior module is shown or indicated on a display that is located near the target actuator in question. Changing to another activated module also changes the mapping, and in conjunction therewith, the indication.

Advantageously, said explicator indication is software controlled. This allows a wide variation in the shape of the indication, that may comprise an icon, a word, a colour, a time-varying representation, such as a blink, and various combinations thereof that are not limited in their dimensions to the size of a single actuator, as far as the available display area goes. In contradistinction, a hardwared indicator would for example be the provision of multiple lamps that each could light a particular icon.

Advantageously, substantially all of said mapping is on a substantially flat area. Such area may, for example be the front plate of a module of a so-called stereo tower. Various actuators may be subjective to pressing, shifting or rotating; and their recess or prominence with respect to the front plane is dictated by the dimensions of a human hand or finger, in combination with the artisticity of the designer. Overall, however, the flatness of the area is easy for human perception as regards effective functionalities and/or actions to be taken.

Various advantageous aspects of the invention are recited in dependent Claims.

### BRIEF DESCRIPTION OF THE DRAWINGS

These and other advantageous aspects of the invention will be explained in and by the appended Figures that show a preferred exemplary embodiment, and in particular:
Figure 1 a block diagram of a device according to the invention
Figure 2 a front view of a device according to the invention;
Figure 3 a different view of the main display on the front of Figure 2.

### DESCRIPTION OF A PREFERRED EMBODIMENT

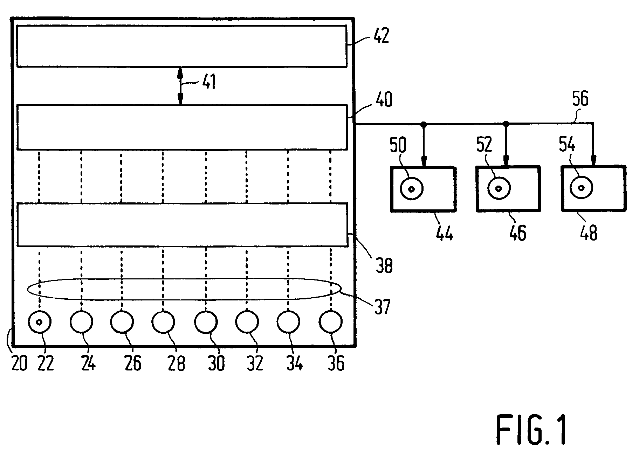

Figure 1 is a block diagram of a device according to the invention, that comprises superior module 20, and further modules 44, 46, 48. The modules are interconnected by a control network 56, that may be a serial single channel bus which supports a multi-master organization. However, the invention does not particularly relate to the functionality of the interconnection network. The superior module has been provided with various control actuators or buttons 22 through 36, inclusive of activating button 22, a display field 38, a central control unit 40, and a user functionality unit 42. The other modules each have a single activating button 50, 52, 54. Their control units nor their user functionality units have been shown. Actuation of the respective activating buttons 22, 50-54 is detected by the local control module, and an activation message is subsequently sent over network 56: this terminates the active state of any other module. If the superior module 20 is activated, buttons 24 through 36 are assigned particular functions. The function may be accessed by pressing the button in question. Each button has its functionality shown by a display indication. This may be a lighted icon on the button in question, or just a sign, pictogram or letter, printed on the button or near it. Accessing may change the nature of the display, such by increase of the light strength, changing the display colour, by blinking, or otherwise. A different way of display is by means of a software controlled display element on display 38. The accessed functionality is signalled to control unit 40, which thereupon drives the user functionality unit 42 to the appropriate operation. If now a different module such as 44 is activated by pressing button 50, module 20 is rendered inactive. This does not apply to the actual user functionality that may be maintained or not, as the case may be. For example, adjustment of a preferred broadcast frequency may be maintained. However, if the superior module is the amplifier, the sound may be made less loud if subsequently a recorder is activated. Now, however, various notional actuator functionalities of module 44 are mapped on respective ones of the buttons or actuators 24 through 36, and even, if required, on button 22. The mapping pattern is predetermined with respect to module 44, and fixed. Each of the buttons that now has a function with respect to module 44, which need not necessarily pertain all of the buttons 24 through 36, may now have an indication of the latter functionality. This may take various forms. A very simple one is that the original icon is maintained. For example, if the superior module is a tape deck module, the mapping thereon of the control buttons for a CD-player would mean that various actuators, although the destination of a mapping operation, would now have actuation functions that would closely correspond to their original ones. However, in accordance with the present invention, various ones of the buttons now have such different functionality that also the name of the function is changed. In particular, this is realized that a new or modified explicator indication occurs on display element 38 as a display item. This many again be an icon, or one or more words explaining or symbolizing the function to be activated by the button in question. If the display is verbal, the content thereof may be controlled by origin module 44. This means that the superior module may, but need not, know expressly the function to be effected by the actuation of a particular button. It is just required that the origin module of the mapping gets back a message over the network 56 as to what it should do according to the effected actuation of one of the buttons on the superior module. Again the indication the display may have an accessory element or property, such as colour, shape, blinking, for drawing general or specific attention. Upon the effected actuation, both the explicatory indication itself and also any accessory element or property may be amended. For brevity, the exact user functionality, the distribution thereof over the various modules, and the cooperation of the modules on a user functionality level have not been described. For simplicity, all buttons have been shown identical, but this is not a restriction. There may be toggle buttons, toggle switches, rotary buttons, sliders and various others. Also, they may have different sizes, shapes, colours, textures and such features that would make them more or less prominent in accordance with the intended use. Their actuatability functionality may be unchanged through the cross-module mapping, or be modified. For example, buttons may change from a toggling on-off control to an one-out-of-n activation, wherein n may have higher values, such that actuating a particular button would render inactive the other n-1, in the same way that only one of the modules is active at any one time. As shown, all modules can be mapped on the single superior module, but various other configurations are feasible. Certain modules may not be mappable, and there may be two or even more superior modules, wherein any non-superior module is mappable on a particular one of the superior modules.

Now, the description of the overall functionality of Figure 1 is not particular to the present invention. The user functionality unit 42 and the central control unit communicate via line 41. The buttons 22-26 communicate with control unit 40, and with display field 38 and associated control along dotted lines collectively indicated by 37. The various functionalities in the respective modules communicate along interconnections not shown, inasfar as necessary for the overall functioning of the device. In particular cases control and function may both be communicated over network 56.

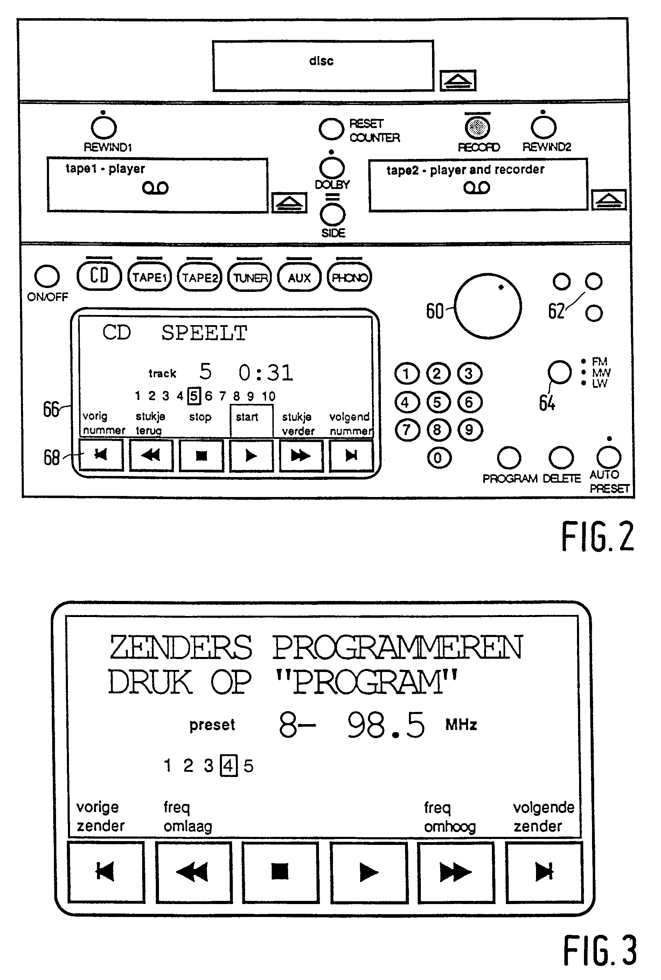

Figure 2 is a front view of a device according to the invention; the functionality is that of a stereo tower. By itself, the functionality of the modules is conventional, but the invention only relates to the mapping of the actuatabilities on the superior module that is the tuner. The top module is a Compact Disc player that as indicated features has only a tray "disc" and a control button for loading and unloading. The next lower module is a double tape deck with a left tape and a right tape. Each tape has a rewind control button and a load/unload button. Furthermore there is a central reset counter button, a "dolby" selection button, a "side" selection button that allows to select between "forward" and "backward" side in an auto-reverse organization, and a "record" button for the right hand tape. Various buttons have a companion light indicator (dot or stroke) to indicate an active or inactive state. The side button has two strokes that indicate "forward" or "reverse" respectively.

The superior module has a row of buttons that activate one of the modules: from left to right, the CD player, the tape deck left tape, the tape deck right tape, the tuner itself, an auxiliary signal source that can be connected to a rear plug not shown, and an additional phono input. All of these have an indicator light showing which of the modules had been selected. Furthermore, there is an ON/OFF button to control the overall activity of the device. At right there is a large rotary button 60, for example to control tuner frequency, three small rotary buttons 62, to control balance, treble, and loudness, respectively, and a single button 64 that controls cycling through three broadcast band regions that are indicated through three small LEDs respectively, a ten digit numerical pad, and three selective buttons that in particular relate to the tuner function proper: program, delete, and auto preset. These buttons select the associated respective functions of the tuner. Selection thereof may influence the display on display element 66 in that appropriate parameters of these three functionalities are displayed, but here, the mapping is inside a single functionality module; the mapping between different functionality modules is discussed hereinafter. Finally, there is a set 68 of six buttons that are the destinations of the cross-module mapping. In the present situation, the CD player is the active module and is actually playing: CD SPEELT. The actually active actuatability pattern is displayed by big display field 66. As shown, this first signals actual operational state: the CD is playing. Next of this signalization, the display signals which track is playing and the time duration since the start of the track. The same is shown once more by a graphical quasi representation in the shape of a small square that steps along the digits that indicate tracks 1 to 10. Furthermore, each of the buttons that is presently activatable has a one or two-word indication as shown, in addition to a standard functionality icon that has been shown on the hardware button. In sequence, the six functionalities are from left to right: previous tune, fast backward, stop, play, fast forward, and next tune. In the situation shown, only one of the six mappable buttons is active, as shown by a square around the associated DISPLAY indication of the button in question. This is no limitation inasmuch as two or more of functionalities could be active coexistently.

Figure 3 shows a different view of the main display on the front of Figure 2. In the actual situation, the tuner itself is the active module. The actually shown operation of the tuner is that it is to be preprogrammed on one or more particular broadcast transmitter stations; the indication "ZENDERS PROGRAMMEREN DRUK OP "PROGRAM"" provides a guideline in that button "program" should be actuated. The next lower line indicates that the actually preset frequency is channel 8 at 98.5 MHz. The next lower line indicates the course of the presetting operation: the small square on 4 means that the fourth station is now in the course of being programmed. Stepping through the programmable stations is through the other buttons. The next row shows the functionalities of four of the six buttons that still carry their standard icons (that are only passive printed on the button in question). The displayed functionalities are from left to right in sequence: previous station, lower frequency, raise frequency, and next station. For simplicity, the example gives only the mapping of six buttons from the CD player to the tuner. This saves four buttons on the player and needs two additional buttons on the tuner. First, this decreases the gross number of buttons by four (not counting the additional mapping from the tape decks to the tuner). Secondly, this makes the outlook of the apparatus more stylish. Third, through the additional and more extended explanation of the button functionality this renders the user control easier and more straightforward.

For a larger number of functionality modules comparable mapping is used. Also rotary buttons can be mapped.

## Claims

1. A consumer appliance device having a first plurality of physically distinct functionality modules, including at least one superior module, that are interconnected through a digital control network, wherein said superior module comprises a plurality of hardwared actuator elements each topologically associated with a respective display element, said device comprising first actuation means for selective user-activation of a particular one of said modules for subsequent user control and mapping means for thereupon mapping each of a second plurality of user actuatabilities of the actually activated module to a respective one of said hardwared actuator elements in combination with an explicator indication to the display element associated to said respective hardware actuator element as long as said user-activation prevails.

2. A device as claimed in Claim 1, wherein said first actuation means are hardwared and continuously accessible.

3. A device as claimed in Claim 1 or 2, wherein said explicator indication is software controlled.

4. A device as claimed in Claim 1, 2 or 3, wherein said explicator indication is verbal.

5. A device as claimed in any of Claim 1 to 4, wherein said second plurality is dependent on the actually activated module.

6. A device as claimed in any of Claims 1 to 5, wherein said modules operate for communicating a user signal stream external to said control network.

7. A device as claimed in any of Claims 1 to 6, for realizing an audio and/or video user functionality.

8. A device as claimed in any of Claims 1 to 7, wherein substantially all of said mapping is on a substantially flat area.
